# EUROPEAN PATENT APPLICATION

(11) **EP 4 603 224 A1**
(43) Date of publication of application: **20.08.2025**
(21) Application number: 23911826.8
(22) Date of filing: 18.12.2023
(51) Int. Cl.: B23Q 3/06, B23Q 3/18

(54) **POSITIONING DEVICE**

(30) Priority: 27.12.2022 JP 2022209585
(71) Applicant: Kosmek Ltd., Kobe-shi, Hyogo 651-2241 (JP)
(72) Inventor: TSUCHIDA, Takeshi, Kobe-shi, Hyogo 651-2241 (JP)
(74) Representative: Dolleymores
(86) International application number: PCT/JP2023/045319
(87) International publication number: WO 2024/143046

(57) **Abstract**

A positioning device includes a pressing member 23 configured to drive a drive member main body portion 18 (drive member 17) toward one side in an up-down direction to be released and a biasing member 24 which is provided in a cylindrical hole 20 and configured to drive the drive member 17 toward the other side in the up-down direction to be locked. In a locked state in which a positioning object W is positioned by a pillar 7 and a positioning rod 11 inserted into a hole 8 of the positioning object W, the pressing member 23 is positioned to be away toward the pressing portion 16 side from a contact point between a cam surface 15 and a cam portion 14 in a direction orthogonal to the up-down direction.

## Description

### [Technical Field]

The present invention relates to a device configured to position a positioning object such as a workpiece, work pallet, or mold.

### [Background Art]

An example of such a device is described in Patent Literature 1. The device (positioning device) of the known art is structured as follows.

The positioning device is formed of members such as a housing with an insertion portion protruding upward, a positioning rod, and a drive member. The housing is provided with a release chamber to which and from which compressed air is supplied and discharged. When the drive member is driven upward to be released, an engaging portion of the drive member comes into contact with a receiving portion provided on the inner surface of the housing, so that the positioning rod is swung back clockwise.

### [Citation List]

### [Patent Literatures]

[Patent Literature 1] Japanese Laid-Open Patent Publication No. 2015-150681

### [Summary of Invention]

### [Technical Problem]

In the above-described positioning device, compressed air needs to be supplied to the release chamber each time the release driving is performed. Therefore, in order to drive the positioning device, a compressed air supply system is required. In this regard, a large-scaled compressed air supply system is not preferable in consideration of energy saving and environment protection. Therefore, preferably, compressed air is not used as a driving source of the positioning device.

Furthermore, in the above-described positioning device, if the friction force between the engaging portion and the receiving portion is large, the positioning rod may be less likely to swing back.

An object of the present invention is to provide a positioning device which can reliably return a positioning rod, without requiring pressure fluid such as compressed air for driving and without causing part of a drive member to make contact (collide) with the inner surface of the housing.

### [Solution to Problem]

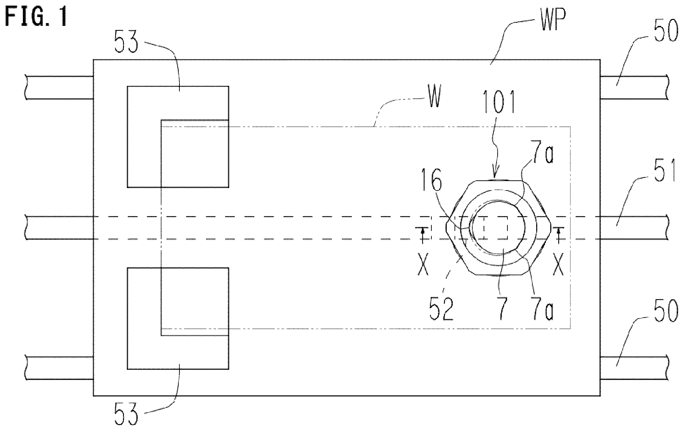

In order to achieve the above object, a positioning device according to the present invention is structured as follows, for example, as shown in FIG. 1 to FIG. 5.

(1) A positioning device of the subject application includes: a housing 2 having an insertion portion 7 protruding upward; a positioning rod 11 which is inserted into an upper hole 9 of the housing 2 to be movable in an up-down direction and a radial direction, opposes the insertion portion 7, and is insertable into a hole 8 of a positioning object W together with the insertion portion 7; a cam portion 14 which is provided on one of the housing 2 and the positioning rod 11 so as to protrude from the one toward the other of the housing 2 and the positioning rod 11; a cam surface 15 which is provided on the other of the housing 2 and the positioning rod 11 so as to extend in the up-down direction and to be engaged with the cam portion 14; a pressing portion 16 which is provided on an outer circumferential portion of the positioning rod 11 to be positionally opposite to the cam portion 14 and the cam surface 15 and is opposable to the inner circumference of the hole 8; a drive member 17, 25 which extends from the positioning rod 11 and is configured to drive the positioning rod 11 in the up-down direction; a cylindrical hole 20 formed in the housing 2, into which the drive member 17, 25 is inserted to be movable in the up-down direction; a pressing member 23, 25a which is provided in the drive member 17, 25 and is configured to drive the drive member 17, 25 toward one side in the up-down direction to be released; and a biasing member 24 which is provided in the cylindrical hole 20 and is configured to drive the drive member 17, 25 toward the other side in the up-down direction to be locked. In a locked state in which the positioning object W is positioned by the insertion portion 7 and the positioning rod 11 inserted into the hole 8, the pressing member 23, 25a is positioned to be away toward the pressing portion 16 side from a contact point between the cam surface 15 and the cam portion 14 in a direction orthogonal to the up-down direction. As the drive member 17, 25 is driven to be released by the pressing member 23, 25a, an upper part of the positioning rod 11 is returned toward the insertion portion 7.

In the positioning device disclosed by the subject application, the following functions and effects are provided. The positioning device does not have a chamber to which and from which pressure fluid is supplied and discharged each time the device is driven, such as a release chamber provided in a known positioning device. In the positioning device, the positioning rod is driven toward one side in the up-down direction to be released, as an external force directly or indirectly acts on the above-described pressing member. The positioning rod is driven in the other of the up-down direction to be locked by the biasing member mentioned above. Therefore, the positioning device does not require pressure fluid such as compressed air for the drive.

Furthermore, as described above, as the pressing member is provided in the drive member so as to be at a position that is away toward the pressing portion side from the contact point between the cam surface and the cam portion, the upper part of the positioning rod is returned toward the insertion portion. That is to say, this positioning device makes it possible to reliably return the positioning rod, without causing part of the drive member to make contact (collide) with the inner surface of the housing.

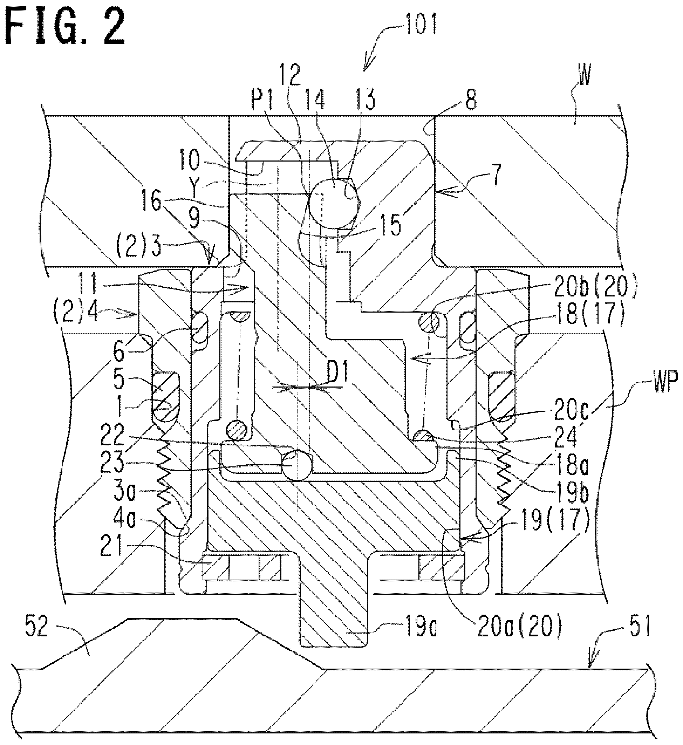

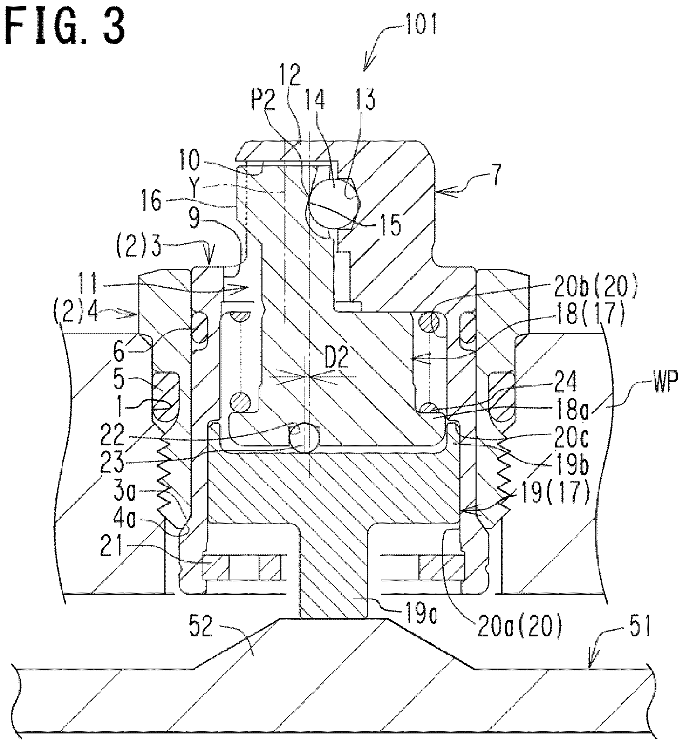

(2) In the positioning device of (1) above, for example, as shown in FIG. 2 and FIG. 3, the drive member 17 includes: a drive member main body portion 18 which extends from the positioning rod 11; and an operational member 19 in which a bottomed cylindrical portion 19b accommodating a base end portion 18a of the drive member main body portion 18 is formed at a leading end, and the pressing member 23 is provided on a base-end-side end face of the drive member main body portion 18 to drive the drive member main body portion 18 toward one side in the up-down direction to be released.

With this arrangement, because the drive member is divided into the drive member main body portion and the operational member, even if an external force acts on the operational member in an oblique direction relative to the up-down direction when the positioning rod is driven to be released, the oblique external force does not directly act on the positioning rod. It is therefore possible to reliably return the positioning rod.

(3) The positioning device of (2) above may be arranged so that a recess 22 is formed in the base-end-side end face of the drive member main body portion 18, and the pressing member 23 is rotatably accommodated in the recess 22.

According to this arrangement, the positioning rod is easily movable in the radial direction.

(4) The positioning device of (2) or (3) above may be arranged so that the pressing member 23 is a sphere.

According to this arrangement, the positioning rod is further easily movable in the radial direction.

(5) The positioning device of any one of (2) to (4) above may be arranged so that, at a center of the base-end-side end face of the operational member 19, an operation unit 19a is provided to protrude from the housing 2.

This arrangement allows the positioning rod to return without needing insertion of a finger, a component, etc. into the housing.

### [Advantageous Effects of Invention]

The present invention makes it to provide a positioning device which can reliably return a positioning rod, without requiring pressure fluid such as compressed air for driving and without causing part of a drive member to make contact (collide) with the inner surface of the housing.

### [Brief Description of Drawings]

FIG. 1 is a plan view showing an example of use of a positioning device disclosed in the subject application.
FIG. 2 shows First Embodiment of the present invention, and is a sectional side view of a positioning device in a locked state.
FIG. 3 is a sectional side view of the positioning device shown in FIG. 2, which is in a released state.
FIG. 4 shows Second Embodiment of the present invention, and is a sectional side view of a positioning device in a locked state.
FIG. 5 is a sectional side view of the positioning device shown in FIG. 4, which is in a released state.

### [Description of Embodiments]

An embodiment of the present invention describes an example of use of a positioning device, which is to position a workpiece W that is a positioning object to a work pallet WP that is a base member.

As shown in FIG. 1, the work pallet WP to which a positioning device 101 is fixed is configured to run on two rails 50 arranged at a predetermined interval. Between the rails 50, a long plate-shaped stationary cam member 51 is provided to extend in the same direction as the rails 50. The stationary cam member 51 has a stationary cam portion 52. As shown in FIG. 2 and the like, the stationary cam portion 52 has a trapezoidal shape and convex upward in side view. A placement table 53 on which the workpiece W is placed is provided on the work pallet WP.

FIG. 2 and FIG. 3 show First Embodiment of the present invention. Based on FIG. 2 and FIG. 3, the structure of the positioning device 101 of First Embodiment will be explained. FIG. 2 shows a locked state of the positioning device 101 (a state in which the workpiece W is positioned), and is a cross-sectional view cut along an X-X line in FIG. 1.

A fitting hole 1 is formed in the work pallet WP to extend in the up-down direction. Into the fitting hole 1, an inner cylinder 3 is inserted as a main body portion of a housing 2. Into between the outer circumference of the inner cylinder 3 and the inner circumference of the fitting hole 1, an external cylinder 4 of the housing 2 is inserted, and the external cylinder 4 is hermetically screwed into the fitting hole 1 through a sealing tool 5. To between the inner cylinder 3 and the external cylinder 4, a sealing tool 6 is attached. At a lower part of the outer circumferential surface of the inner cylinder 3, a tapered surface 3a whose outer diameter increases downward is provided. At a lower part of the external cylinder 4, a tapered surface 4a whose inner diameter increases downward is provided. As the external cylinder 4 is inserted from above the inner cylinder 3, the tapered surfaces 3a and 4a of the respective cylinders are engaged with each other, with the result that the inner cylinder 3 is centered with the central axis of the fitting hole 1. As a result, the housing 2 is hermetically fixed to a predetermined position of the fitting hole 1.

A pillar 7 as an insertion portion is integrally protrudes upward from the inner cylinder 3 to be coaxial with the inner cylinder 3. The pillar 7 is inserted into a circular hole 8 formed in the workpiece W. The pillar 7 is substantially circular in plan view. As shown in FIG. 1, two positioning protrusions 7a are provided on the outer peripheral surface of the pillar 7 to be spaced apart from each other.

In an upper part of the inner cylinder 3, an upper hole 9 is formed to extend in the up-down direction. The upper hole 9 has a hole axis Y that is eccentric leftward from the central axis of the pillar 7. At a part on the upper hole 9 side of the circumferential wall of the pillar 7, an opening portion 10 is formed in a transverse manner. The positioning rod 11 is inserted into the upper hole 9 so as to be movable in an up-down direction and a radial direction. In the present embodiment, an upper wall 12 is provided at the pillar 7 to cover an upper part of the positioning rod 11. In this regard, the upper wall 12 may be omitted.

A ball 14 which functions as a cam portion is fitted into a support hole 13 formed in a side face of the opening portion 10 of the pillar 7. The ball 14 protrudes towards a side face of the positioning rod 11.

In the circumferential wall of a leading end portion of the positioning rod 11, a cam surface 15 is formed to extend in the up-down direction to be engaged with the ball 14. The cam surface 15 is arc-shaped in cross section (plane cross section) cut along a direction perpendicular to the up-down direction, and is curved so that the closer the cam surface 15 is to the base end portion of the positioning rod 11, the closer the cam surface 15 is to the axial center of the positioning rod 11. In the circumferential wall of the leading end portion of the positioning rod 11, a pressing portion 16 is provided at a position opposite to the ball 14 and the cam surface 15 so as to oppose the inner circumference of the circular hole 8 of the workpiece W.

The drive member 17 which is configured to drive the positioning rod 11 in the up-down direction is structured as described below.

The drive member 17 of the present embodiment is divided into a drive member main body portion 18 and an operational member 19. The drive member main body portion 18 is a portion extending from the positioning rod 11 and is integrally formed with the positioning rod 11.

The inner cylinder 3 constituting the housing 2 has a cylindrical hole 20 communicating with the upper hole 9. The drive member main body portion 18 and the operational member 19 (i.e., the drive member 17) are inserted into this cylindrical hole 20 so as to be movable in the up-down direction. The drive member main body portion 18 is inserted into the cylindrical hole 20 so as to be movable in the up-down direction and the radial direction.

The cylindrical hole 20 has a large diameter hole 20a and a small diameter hole 20b which are formed in this order from the base end side. The small diameter hole 20b is located between the upper hole 9 and the large diameter hole 20a, and communicates with the upper hole 9. The operational member 19 is slidably inserted into the large diameter hole 20a. The operational member 19 can only move in the up-down direction and cannot move in the radial direction. A stepped portion 20c provided between the large diameter hole 20a and the small diameter hole 20b serves as a stopper preventing the operational member 19 from moving toward the drive member main body portion 18 side. A retaining ring 21 is attached to the base end portion of the inner cylinder 3, and this retaining ring 21 functions as a stopper (retainer) preventing the operational member 19 from moving in the direction opposite to the above.

At the center of a base-end-side end face of the operational member 19, an operation unit 19a is provided to protrude from the inner cylinder 3. The operation unit 19a may be provided at a position offset from the center of the base-end-side end face of the operational member 19. The operation unit 19a may be omitted.

The leading end of the operational member 19 is formed at a bottomed cylindrical portion 19b, and a base end portion 18a of the drive member main body portion 18 is accommodated in this cylindrical portion 19b. The inner diameter of the cylindrical portion 19b is equal to the diameter of the small diameter hole 20b. A ball 23 (sphere) as a pressing member is rotatably accommodated in a recess 22 (support hole) formed in an end face of the above-mentioned base end portion 18a. Part of the ball 23 protrudes from the recess 22. As the pressing member, a rotational body such as a roller (not illustrated) may be used in place of the ball 23.

The pressing member (ball 23) may be provided on the base-end-side end face of the drive member main body portion 18 (i.e., the end face of the base end portion 18a) to protrude from the base-end-side end face, and may be integrally formed with the base end portion 18a. In other words, the pressing member may not be a rotational body such as the ball 23. The ball 23 is configured to drive the drive member main body portion 18 toward one side in the up-down direction to be released.

As shown in FIG. 2, in the locked state in which the workpiece W is positioned by the pillar 7 and the positioning rod 11, the ball 23 is positioned to be away toward the pressing portion 16 side from a contact point P1 between the cam surface 15 and the ball 14 (cam portion) in a direction orthogonal to the up-down direction. In FIG. 2, the distance between the center of the ball 23 and the above-described contact point P1 is defined as D1 in the direction orthogonal to the up-down direction.

In the present embodiment, as shown in FIG. 3 in which the positioning device 101 is in the released state, the ball 23 is positioned to be away toward the pressing portion 16 side from a contact point P2 between the cam surface 15 and the ball 14 (cam portion) in a direction orthogonal to the up-down direction, also in the released state. In FIG. 3, the distance between the center of the ball 23 and the above-described contact point P2 is defined as D2 (D1>D2) in the direction orthogonal to the up-down direction. In the released state, in the direction orthogonal to the up-down direction, the ball 23 may not be positioned away toward the pressing portion 16 side from the contact point P2 between the cam surface 15 and the ball 14 (cam portion).

Inside the small diameter hole 20b of the cylindrical hole 20, a spring 24 is provided as a biasing member for driving the drive member main body portion 18 (drive member 17) for locking, toward the other side in the up-down direction. The spring 24 is a compression coil spring. The base end portion 18a of the drive member main body portion 18 is in a flange shape and functions as a spring receiver that receives one end of the spring 24.

The positioning device 101 described above operates as follows.

In the locked state shown in FIG. 2, the biasing force of the spring 24 causes the drive member main body portion 18, the operational member 19 (i.e., the drive member 17), and the positioning rod 11 to descend, the ball 14 which functions as a cam portion presses the cam surface 15 leftward, and the pressing portion 16 advances toward the inner circumference of the circular hole 8 of the workpiece W. As a result, the pressing portion 16 and the two protrusions 7a provided on the outer circumferential surface of the pillar 7 position the workpiece W through the circular hole 8, at the position where a substantial axial center of the pillar 7 coincides with the axial center of the circular hole 8.

When switching from the locked state shown in FIG. 2 to the released state shown in FIG. 3, the work pallet WP is caused to run on the rails 50 to bring the operation unit 19a of the operational member 19 into contact with the stationary cam portion 52 of the stationary cam member 51, so as to cause the operation unit 19a to climb over the stationary cam portion 52. As a result, the operational member 19 presses the drive member main body portion 18 upward through the ball 23 against the biasing force of the spring 24, with the result that the positioning rod 11 ascends.

As described above, in the locked state in which the workpiece W is positioned by the pillar 7 and the positioning rod 11, the ball 23 is positioned to be away toward the pressing portion 16 side from the contact point P1 between the cam surface 15 and the ball 14 (cam portion) in the direction orthogonal to the up-down direction. Therefore, during the releasing drive, the upper part of positioning rod 11 is returned toward the pillar 7. This allows the positioning rod 11 to reliably return.

The positioning device 101 does not have a chamber to which and from which pressure fluid is supplied and discharged each time the device is driven, such as a release chamber provided in a known positioning device. In the positioning device 101 of the present embodiment, the positioning rod 11 is driven toward one side in the up-down direction to be released, as an external force indirectly acts on the ball 23 which is the pressing member. Toward the other side in the up-down direction, the positioning rod 11 is driven by the spring 24 to be locked. Therefore, the positioning device 101 does not require pressure fluid such as compressed air for the drive. The operation unit 19a may be manually pressed and moved by hand.

In the present embodiment, because the drive member 17 is divided into the drive member main body portion 18 and the operational member 19, even if an external force acts on the operational member 19 in an oblique direction relative to the up-down direction when the positioning rod 11 is driven to be released, the oblique external force does not directly act on the positioning rod 11. It is therefore possible to reliably return the positioning rod 11.

The cylindrical portion 19b formed in the operational member 19 functions as a stopper in the radial direction, which prevents the base end portion 18a of the drive member main body portion 18 from being caught between the operational member 19 and the stepped portion 20c.

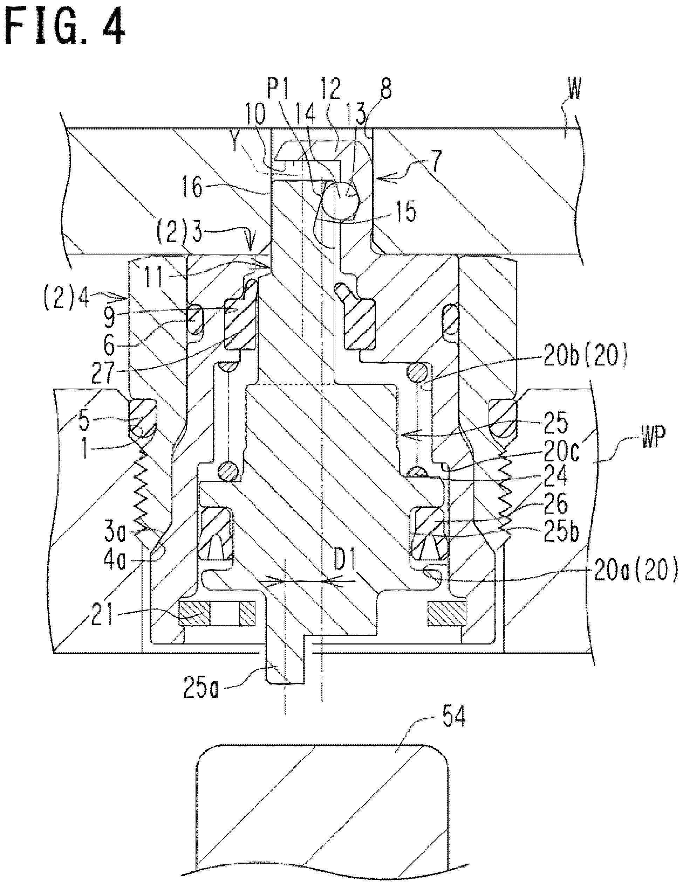

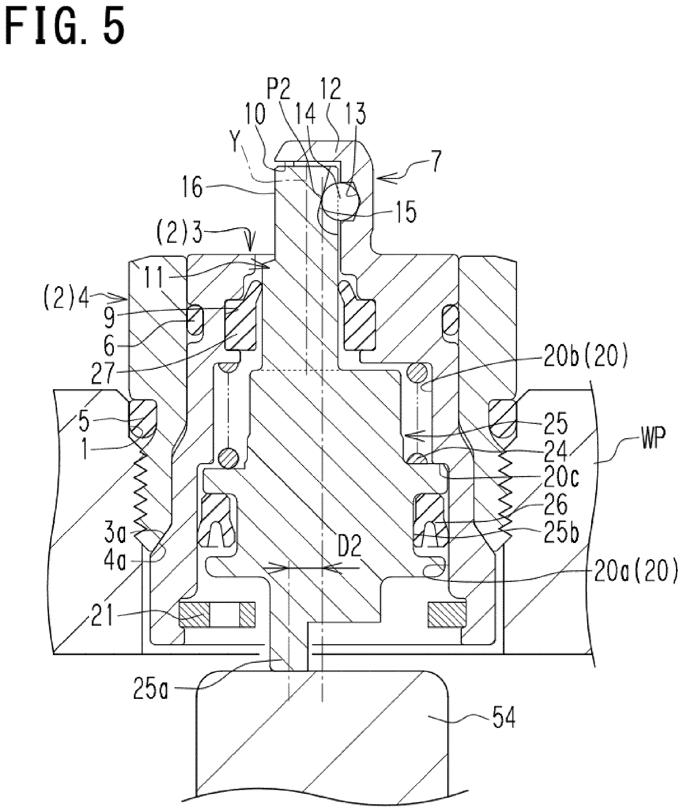

FIG. 4 and FIG. 5 show Second Embodiment of the present invention. In a drive member 25 constituting a positioning device of Second Embodiment, a drive member main body portion and an operational member are integrated. This is the main difference between the positioning device of First Embodiment and the positioning device of Second Embodiment. In regard to members constituting the positioning device of Second Embodiment, those identical with the members constituting the positioning device of First Embodiment are denoted by the same reference numbers.

A drive member 25 of Second Embodiment in which a drive member main body portion and an operational member are integrated is structured as described below. On a base-end-side end face of the drive member 25, a pressing member 25a is provided. The pressing member 25a protrudes from an inner cylinder 3. The pressing member 25a of the present embodiment is solid cylindrical in shape. In a locked state in which a workpiece W is positioned by a pillar 7 and a positioning rod 11, the pressing member 25a is positioned to be away toward the pressing portion 16 side from a contact point P1 between a cam surface 15 and a ball 14 (cam portion) in a direction orthogonal to the up-down direction. In FIG. 4, the distance between the axial center of the pressing member 25a and the above-described contact point P1 is defined as D1 in the direction orthogonal to the up-down direction.

In the present embodiment, as shown in FIG. 5 in which a positioning device is in a released state, the pressing member 25a is positioned to be away toward the pressing portion 16 side from a contact point P2 between the cam surface 15 and the ball 14 (cam portion) in a direction orthogonal to the up-down direction, also in the released state. In FIG. 5, the distance between the axial center of the pressing member 25a and the above-described contact point P2 is defined as D2 (D1>D2) in the direction orthogonal to the up-down direction. In the released state, in the direction orthogonal to the up-down direction, the pressing member 25a may not be positioned away toward the pressing portion 16 side from the contact point P2 between the cam surface 15 and the ball 14 (cam portion).

A ring-shaped sliding member 26 is attached to an annular groove 25b formed in the outer circumference of the drive member 25. A dust seal 27 is attached to an upper hole 9 formed in the inner cylinder 3 in order to prevent foreign matters from entering the inner cylinder 3 through the upper hole 9.

The above-described positioning device operates as follows.

In the locked state shown in FIG. 4, the biasing force of a spring 24 causes the drive member 25 and the positioning rod 11 to descend, a ball 14 which functions as a cam portion presses the cam surface 15 leftward, and the pressing portion 16 advances toward the inner circumference of a circular hole 8 of the workpiece W. Due to this, the workpiece W is positioned relative to a work pallet WP.

When the locked state shown in FIG. 4 is switched to the released state shown in FIG. 5, the pressing member 25a is pressed from below by a member 54. As a result, the drive member 25 and the positioning rod 11 ascend against the biasing force of the spring 24.

As described above, in the locked state in which the workpiece W is positioned by the pillar 7 and the positioning rod 11, the pressing member 25a is positioned to be away toward the pressing portion 16 side from the contact point P1 between the cam surface 15 and the ball 14 (cam portion) in the direction orthogonal to the up-down direction. Therefore, during the releasing drive, the upper part of positioning rod 11 is returned toward the pillar 7. This allows the positioning rod 11 to reliably return.

The positioning device does not have a chamber to which and from which pressure fluid is supplied and discharged each time the device is driven, such as a release chamber provided in a known positioning device. In the positioning device of the present embodiment, the positioning rod 11 is driven toward one side in the up-down direction to be released, as an external force directly acts on the pressing member 25a. Toward the other side in the up-down direction, the positioning rod 11 is driven by the spring 24 to be locked. Therefore, the positioning device does not require pressure fluid such as compressed air for the drive. The pressing member 25a may be manually pressed and moved by hand.

The present invention is not limited to the embodiments above, and it is possible to suitably combine the elements of the embodiments or to make various modifications to the embodiments above as long as it does not depart from the spirit of the present invention.

For example, the above-described embodiments are changeable as follows.

The circular hole 8 may not be circular in shape. That is, the hole in the workpiece W into which the pillar 7 and the positioning rod 11 are inserted may be elliptical in shape, for example. The same applies to the shape of the pillar 7. The pillar 7 may be elliptical in shape in plan view.

While in First Embodiment above the stationary cam member 51 is fixed, the stationary cam member 51 may be movable, and the operation unit 19a may be pressed and moved by moving the stationary cam portion 52 of the stationary cam member 51. Alternatively, as described in Second Embodiment, the operation unit 19a may be pressed and moved from below by the member 54. In the positioning device of Second Embodiment, an external force may act on the pressing member 25a in the left-right direction such as an action using the stationary cam member 51 in First Embodiment, as long as the external force is a light force.

While the posture of the positioning device is vertical in the examples above, the positioning device may be upside down or may be obliquely postured.

The cam portion may be different from the ball 14 in the examples above, and may be solid cylindrical in shape. In this case, the cam surface 15 may be flat instead of arc-shaped in a cross-sectional view. The ball 14 may be provided at the positioning rod 11, and the cam surface 15 may be provided on the inner cylinder 3 (housing 2). The cam portion such as the ball 14 may be integrally formed with the housing 2 (or the positioning rod 11).

The number of protrusions 7a provided on the outer circumferential surface of the pillar 7 for positioning may not be two, and may be one. When there is one protrusion 7a, the protrusion 7a is positioned so that the pressing portion 16 and the protrusion 7a are symmetric about the axial center of the pillar 7. The protrusion 7a may be omitted. In this case, the positioning device presses the workpiece W onto the wall surface of the placement table 53 so that the workpiece W is positioned at the contact position with the wall surface.

### [Reference Signs List]

2: housing, 7: pillar (insertion portion), 8: circular hole (hole), 9: upper hole, 11: positioning rod, 14: ball (cam portion), 15: cam surface, 16: pressing portion, 17: drive member, 18: drive member main body portion, 18a: base end portion, 19: operational member, 19a: operation unit, 19b: cylindrical portion, 20: cylindrical hole, 22: recess, 23: ball (pressing member), 24: spring (biasing member), 25: drive member, 25a: pressing member, 101: positioning device, W: workpiece (positioning object)

## Claims

1. A positioning device comprising:
a housing (2) having an insertion portion (7) protruding upward;
a positioning rod (11) which is inserted into an upper hole (9) of the housing (2) to be movable in an up-down direction and a radial direction, opposes the insertion portion (7), and is insertable into a hole (8) of a positioning object (W) together with the insertion portion (7);
a cam portion (14) which is provided on one of the housing (2) and the positioning rod (11) so as to protrude from the one toward the other of the housing (2) and the positioning rod (11);
a cam surface (15) which is provided on the other of the housing (2) and the positioning rod (11) so as to extend in the up-down direction and to be engaged with the cam portion (14);
a pressing portion (16) which is provided on an outer circumferential portion of the positioning rod (11) to be positionally opposite to the cam portion (14) and the cam surface (15) and is opposable to the inner circumference of the hole (8);
a drive member (17, 25) which extends from the positioning rod (11) and is configured to drive the positioning rod (11) in the up-down direction;
a cylindrical hole (20) formed in the housing (2), into which the drive member (17, 25) is inserted to be movable in the up-down direction;
a pressing member (23, 25a) which is provided in the drive member (17, 25) and is configured to drive the drive member (17, 25) toward one side in the up-down direction to be released; and
a biasing member (24) which is provided in the cylindrical hole (20) and is configured to drive the drive member (17, 25) toward the other side in the up-down direction to be locked,
in a locked state in which the positioning object (W) is positioned by the insertion portion (7) and the positioning rod (11) inserted into the hole (8), the pressing member (23, 25a) being positioned to be away toward the pressing portion (16) side from a contact point between the cam surface (15) and the cam portion (14) in a direction orthogonal to the up-down direction, and
as the drive member (17, 25) is driven to be released by the pressing member (23, 25a), an upper part of the positioning rod (11) being returned toward the insertion portion (7).

2. The positioning device according to claim 1, wherein,
the drive member (17) includes:
a drive member main body portion (18) which extends from the positioning rod (11); and
an operational member (19) in which a bottomed cylindrical portion (19b) accommodating a base end portion (18a) of the drive member main body portion (18) is formed at a leading end, and
the pressing member (23) is provided on a base-end-side end face of the drive member main body portion (18) to drive the drive member main body portion (18) toward one side in the up-down direction to be released.

3. The clamping device according to claim 2, wherein,
a recess (22) is formed in the base-end-side end face of the drive member main body portion (18), and
the pressing member (23) is rotatably accommodated in the recess (22).

4. The clamping device according to claim 2 or 3, wherein,
the pressing member (23) is a sphere.

5. The clamping device according to any one of claims 2 to 4, wherein,
at a center of the base-end-side end face of the operational member (19), an operation unit (19a) is provided to protrude from the housing (2).
